# EUROPÄISCHE PATENTSCHRIFT

(11) **EP 2 005 126 B1**
(45) Veröffentlichungstag und Bekanntmachung des Hinweises auf die Patenterteilung: **26.07.2017**
(21) Anmeldenummer: 07727163.3
(22) Anmeldetag: 21.03.2007
(51) Int. Cl.: G01H 11/08

(54) **SCHWINGUNGSSENSORANORDNUNG**
VIBRATION SENSOR ARRAY
DISPOSITIF CAPTEUR DE VIBRATIONS

(30) Priorität: 03.04.2006 CH 5462006
(43) Veröffentlichungstag der Anmeldung: 24.12.2008
(73) Patentinhaber: vonRoll infratec (investment) ag, 6300 Zug (CH)
(72) Erfinder: LÖTSCHER, Hugo, CH-6275 Ballwil (CH)
(74) Vertreter: OK pat AG
(86) Internationale Anmeldenummer: PCT/EP2007/052687
(87) Internationale Veröffentlichungsnummer: WO 2007/115913

(56) Entgegenhaltungen:
- EP-A- 0 997 714
- WO-A-92/22792
- DE-C1- 4 036 684
- US-A- 4 991 439

## Beschreibung

Die vorliegende Erfindung betrifft gemäss dem Oberbegriff des unabhängigen Anspruchs 1 eine Schwingungssensoranordnung.
Gattungsgemässe Schwingungssensoranordnungen und die dazu benötigten Aufzeichnungs-, Auswerte- und Anzeigegeräte werden durch die Patentanmelderin seit Jahren unter dem Namen VIBRAFON vertrieben. Vibrafone sind Bestanteil der Systeme ORTOMAT^{®}, LOG2000, LOG3000, LOG1 und in vereinfachter Ausführung der LECK-PEN. Solche Schwingungssensoranordnungen umfassen ein stabförmiges Piezoelement mit zwei einander gegenüberliegenden Endkappen; eine schwingende Masse, welche permanent in mechanischem Kontakt mit einer ersten Endkappe des Piezoelements steht, wobei diese schwingende Masse eine wasserdichte Kapsel umfasst, in welcher das Piezoelement fixiert ist; eine ruhende Masse, welche permanent in mechanischem Kontakt mit einer zweiten Endkappe des Piezoelements steht und welche in dieser wasserdichten Kapsel angeordnet ist; eine Feder, welche zwischen der ruhenden Masse und der schwingenden Masse angeordnet ist und mittels welcher der permanente mechanische Kontakt der beiden Massen mit den beiden Endkappen des Piezoelements gewährleistet ist, indem sie diese beiden Massen konstant gegen beiden Endkappen des Piezoelements drückt; elektrische Kontakte zum Abgreifen von elektrischen Signalen, welche von diesem Piezoelement, entsprechend den über die schwingende Masse in demselben bewirkten Druckschwankungen, erzeugt werden; und ein Aufzeichnungsgerät, welches mit den elektrischen Kontakten verbunden ist, und welches zum Aufzeichnen der vom Piezoelement erzeugten elektrischen Signale ausgebildet ist US 4991439 offenbart beispielsweise eine solche Vorrichtung. Solche Schwingungssensoranordnungen werden als Leckdetektoren standardmässig in Hydranten von Wasserversorgungsnetzen eingebaut, wobei das Aufzeichnungsgerät eine Elektronik mit Mikroprozessor und Speicher umfasst und mit den elektrischen Kontakten verbunden ist. Das Aufzeichnungsgerät ist vorzugsweise als Datalogger ausgebildet und kann über eine Infrarotschnittstelle (vgl. DE 197 57 581 A1) oder über eine Funkantenne die vom Datalogger erfassten Daten auf ein Empfangsgerät übertragen. Die übertragenen Daten werden eingesammelt und vorzugsweise zentral ausgewertet und angezeigt.

Die Aufgabe der Erfindung bestand darin, eine alternative und tragbare Schwingungssensoranordnung vorzuschlagen, welche Messdaten liefert, die mit den eingebauten Lecksensoren vergleichbar sind.

Diese Aufgabe wird durch die Merkmale des Anspruchs 1 gelöst indem eine eingangs definierte, gattungsgemässe Schwingungssensoranordnung erfindungsgemäss dadurch weitergebildet wird, dass sie tragbar ausgebildet ist. Die erfindungsgemässe Schwingungssensoranordnung ist insbesondere dadurch gekennzeichnet, dass die wasserdichte Kapsel und die ruhende Masse als Stromversorgung für dieses Aufzeichnungsgerät ausgebildet sind, indem diese ruhende Masse zumindest eine Batterie für den Betrieb dieses Aufzeichnungsgeräts umfasst, wobei diese zumindest eine Batterie über elektrische Leiter mit diesem Aufzeichnungsgerät verbunden bzw. verbindbar ist. Bevorzugte und weitere erfinderische Merkmale dieser Schwingungssensoranordnung ergeben sich aus den abhängigen Ansprüchen.

Die erfindungsgemässe Schwingungssensoranordnung wird nun mittels schematischen, den Umfang der Erfindung nicht einschränkenden Zeichnungen, an Hand von beispielhaften, bevorzugten Ausführungsformen näher erläutert. Dabei zeigen:
- Fig. 1: einen Teilschnitt durch eine erfindungsgemässe Schwingungssensoranordnung gemäss einer ersten Ausführungsform;
- Fig. 2: einen Teilschnitt durch eine erfindungsgemässe Schwingungssensoranordnung gemäss einer zweiten Ausführungsform.

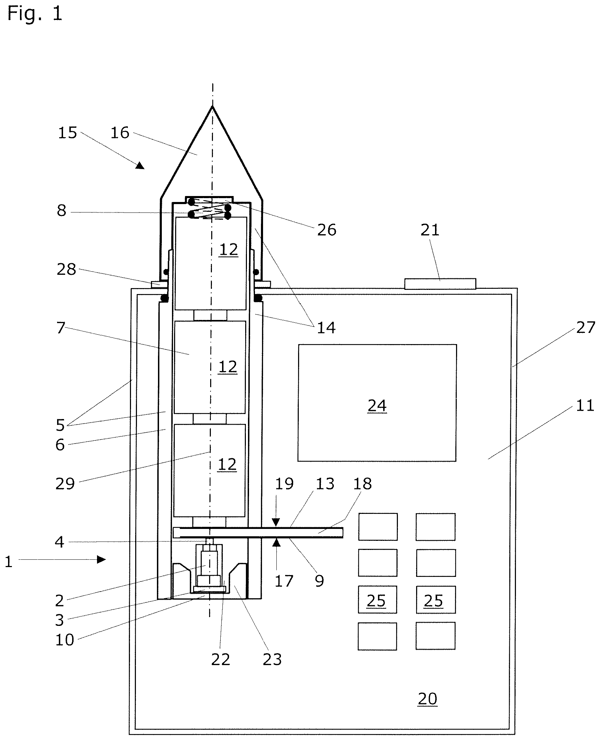

Die Figur 1 zeigt einen Teilschnitt durch eine erfindungsgemässe Schwingungssensoranordnung 1 gemäss einer ersten Ausführungsform. Ein vorzugsweise stabförmiges Piezoelement 2 mit zwei einander gegenüberliegenden, als Endkappen ausgebildeten Seiten 3,4 befindet sich in einer wasserdichten Kapsel 6, die als schwingende Masse 5 ausgebildet ist und permanent in mechanischem Kontakt mit einer ersten Seite 3 bzw. Endkappe des Piezoelements 2 steht. Das Piezoelement 2 ist in dieser Kapsel 6 fixiert. Vorzugsweise befindet sich das Piezoelement 2 in einer seiner äusseren Form angenäherten Vertiefung 22 eines Verschlussstücks 23, das dichtend und mechanisch fixiert in die Kapsel 6 eingebaut ist.

Dieser Einbau wird vorzugsweise durch Einkleben, Einpressen, Einschrauben oder eine beliebige Kombination dieser Möglichkeiten bewerkstelligt. Dadurch ist das stabförmige Piezoelement 2 in der Kapsel 6 und damit auch in der schwingenden Masse 5 fixiert.

Eine ruhende Masse 7 ist in dieser wasserdichten Kapsel 6 angeordnet und steht permanent in mechanischem Kontakt mit einer zweiten Seite 4 bzw. Endkappe des Piezoelements 2. Eine Feder 8 ist zwischen der ruhenden Masse 7 und der schwingenden Masse 5 angeordnet und drückt diese beiden Massen 5,7 konstant gegen beiden Seiten 3,4 bzw. Endkappen des Piezoelements 2. Die Federkraft dieser Feder 8 ist dabei so gross gewählt, dass keine dieser beiden Massen 5,7 bei den maximal zu messenden Vibrationen vom Piezoelement 2 abhebt. Diese Feder 8 gewährleistet somit einen permanenten mechanischen Kontakt der beiden Massen 5,7 mit den beiden Seiten 3,4 bzw. Endkappen des Piezoelements 2.

Elektrische Kontakte 9,10 greifen die elektrischen Signale ab, welche von diesem stabförmigen Piezoelement 2 - entsprechend den über die schwingende Masse 5 in demselben bewirkten Druckschwankungen - erzeugt werden. Stabförmige Piezoelemente und Piezostapel sind dem Fachmann aus dem Stand der Technik bekannt.

Ein Aufzeichnungsgerät 11 zeichnet die vom Piezoelement 2 erzeugten elektrischen Signale auf, indem sie diese in speicherbare und/oder anzeigbare digitale Daten umwandelt. Das Aufzeichnungsgerät umfasst vorzugsweise eine Elektronik mit einem Mikroprozessor und einem Speicher und ist mit den elektrischen Kontakten 9,10 verbunden.

Die wasserdichte Kapsel 6 und die ruhende Masse 7 sind erfindungsgemäss als Stromversorgung für dieses Aufzeichnungsgerät 11 ausgebildet, indem diese ruhende Masse 7 zumindest eine Batterie 12 für den Betrieb dieses Aufzeichnungsgeräts 11 umfasst. Dabei ist diese zumindest eine Batterie 12 über elektrische Leiter 13,14 mit diesem Aufzeichnungsgerät 11 verbunden. Bevorzugt wird die ganze ruhende Masse, das heisst die sogenannte "Referenzmasse" aus mehreren, d.h. möglichst vielen, Batterien gebildet, so dass die tragbare Schwingungssensoranordnung 1 bei minimalem Totalgewicht eine maximale Referenzmasse aufweist und zugleich eine möglichst grosse elektrische Autonomie erhält. Es ist jedoch möglich, den Raum des Batteriefachs mit beispielsweise einem metallenen "Dummy" aufzufüllen, so dass eine bevorzugte Batteriespannung bei noch grösserer Referenzmasse ermöglicht wird.

Die Schwingungssensoranordnung 1 ist tragbar ausgebildet, sie ist vorzugsweise teilweise (wie Fig. 1 zeigt) so in das Aufzeichnungsgerät 11 eingebaut, dass die schwingende Masse 5 dieses Aufzeichnungsgerät 11 mit umfasst. Besonders bevorzugt ist dabei, dass die wasserdichte Kapsel 6 ein Fühlerende 15 umfasst, das ausserhalb des, vorzugsweise ebenfalls wasserdicht ausgebildeten, Aufzeichnungsgeräts 11 angeordnet ist. Eine Gegenmutter 28 fixiert die wasserdichte Kapsel 6 in bevorzugter Weise am Gehäuse 27 des Aufzeichnungsgeräts 11. Dieses Aufzeichnungsgerät ist bevorzugt so zusammengebaut, dass verschraubte Teile eine Dichtung zwischen sich einklemmen. Die Anzeige 24 zum Ablesen von Messwerten sowie von Einstellungs- und Bedienungsparametern und die Tasten 25 zum Bedienen des Aufzeichnungsgeräts 11 werden vorzugsweise mit einer wasserdichten Folie belegt. Besonders bevorzugt ist, dass die tragbare Schwingungssensoranordnung 1 als Ganzes (mit Aufzeichnungsgerät und Batterie/Schwingungssensorkapsel) komplett wasserdicht ausgebildet ist.

Das Fühlerende 15 ist bevorzugt als Schraubdeckel für die die Batterien aufnehmende, wasserdichte Kapsel 6 ausgebildet. Zudem weist dieses Fühlerende 15 vorzugsweise eine innere Vertiefung 26 auf, welche die Feder 8 zentriert. Dieser Schraubdeckel weist vorzugsweise eine Kegelspitze 16 auf, so dass beispielsweise Schwingungen an Rohrstücken, Armaturen oder Hydranten von Wasserverteilungsnetzen gezielt abgetastet oder abgegriffen werden können. Auch die Verwendung der Schwingungssensoranordnung 1 als Messgerät zum Detektieren von Schwingungen, die auf Lecks in anderen Fluidleitungen (z.B. Gasleitungen) oder auf Lagerschäden von Transportmitteln und Maschinen zurückzuführen sind wird meistens durch ein solches kegelspitzenförmiges Fühlerende 15 begünstigt. Es kann aber auch vorgesehen sein, das Fühlerende 15 pyramidenförmig, abgerundet, schraubenförmig oder teilweise flach (z.B. als Kegelstumpf oder Pyramidenstumpf) auszubilden, wenn besondere Einsatzgebiete zum Detektieren von Schwingungen dies erforderlich machen. Insbesondere können mehrere als Schraubdeckel ausgebildete Fühlerenden 15 mit jeweils individueller Formgebung ein Sortiment bilden, das zu einer Schwingungssensoranordnung 1 gehört.

Die wasserdichte Kapsel 6 ist aus einem Material gebildet, das an Hand seiner physikalischen Eigenschaften geeignet ist, Vibrationen zu übertragen. Dabei soll dieses Material die Vibrationen weiterleiten, möglichst ohne diese zu beeinflussen und/oder selbst eine Beschädigung zu erleiden. Die wasserdichte Kapsel 6 umfasst vorzugsweise ein elektrisch leitendes Material, welches die Funktion eines Leiters zur elektrischen Kontaktierung der Batterien 12 und/oder des Piezoelements 2 übernehmen kann.

Zu Erfüllen dieser beiden Forderungen kann die wasserdichte Kapsel 6 aus einem elektrisch leitenden, hochfesten Kunststoff ausgebildet sein; dieser hat den Vorteil, dass das Gewicht der schwingenden Masse 5, zu welcher diese wasserdichte Kapsel 6 gerechnet wird, zusätzlich vermindert werden kann. An der Stelle von elektrisch leitendem, hochfestem Kunststoff kann auch ein nicht-leitender Kunststoff verwendet werden, wenn dies seine physikalischen Eigenschaften erlauben, und wenn die Funktion eines Leiters zur elektrischen Kontaktierung der Batterien 12 und/oder des Piezoelements 2 von einem anderen elektrischen Leiter, z.B. von einer elektrisch leitenden, zumindest teilweisen Oberflächenbeschichtung oder von entsprechend verlegten Drähten übernommen wird. Bevorzugt wird die Ausbildung der wasserdichten Kapsel aus einem Metall, so dass die elektrische Leitung über die Kapselwand gewährleistet ist. Besonders bevorzugt sind dabei Leichtmetalle oder Leichtmetalllegierungen, weil diese ebenfalls ermöglichen, das Gewicht der schwingenden Masse zu minimieren. Zudem sind Metalle bevorzugt, die eine chemisch widerstandsfähige Oberfläche (sei dies durch entsprechende Beschichtung oder durch Oxidation wie etwa beim Aluminium) aufweisen.

Vorzugsweise ist die wasserdichte Kapsel 6 aus einem elektrisch leitenden Kunststoff oder aus einem Metall ausgebildet. Als geeignetes Metall hat sich beispielsweise eine Messinglegierung herausgestellt. Die wasserdichte Kapsel 6 umfasst bevorzugt zudem zumindest einen O-Ring oder eine andere, ringförmige Dichtung zum dichtenden Verbinden von verschraubten und wieder lösbaren Teilen dieser wasserdichten Kapsel 6.

Der elektrische Kontakt 9 der Schwingungssensoranordnung 1 ist vorzugsweise auf einer ersten Seite 17 einer Platine 18 angeordnet. Zudem ist ebenfalls bevorzugt, dass der elektrische Leiter 13 auf einer zweiten Seite 19 der Platine 18 angeordnet ist. Diese spezielle Platine 18 ist dann so zwischen dem Piezoelement 2 und der zumindest einen Batterie 12 angeordnet, dass die zweite Seite 4 bzw. Endkappe des Piezoelements 2 den elektrische Kontakt 9 und ein erster Pol der Batterie 12 den elektrischen Leiter 13 kontaktiert. Gegenüber den elektrisch leitenden Bestandteilen der Kapsel 6 sind der elektrische Kontakt 9 und der elektrische Leiter 13 elektrisch isoliert. Besonders bevorzugt ist dieser erste Pol der zumindest einen Batterie 12 der Plus-Pol, weil dieser bei den vorzugsweise verwendeten, handelsüblichen Batterien einen erhabenen Kontakt darstellt, welcher auf einfach Weise mit dem elektrischen Leiter 13 in Kontakt gebracht werden kann. Alternativ (nicht gezeigt) kann dieser erste Pol auch der Minus-Pol sein; dann wird allerdings bevorzugt, dass der elektrische Leiter 13 eine Verdickung oder Erhöhung aufweist, welche diesen Minus-Pol sicher kontaktieren kann.

Als Batterien können handelsübliche Alkalibatterien, beispielsweise des Typs A, AA oder AAA, verwendet werden. Allerdings wird die Verwendung von Lithiumbatterien wegen ihrer längeren Lebensdauer bevorzugt. Speziell bevorzugt sind wieder-aufladbare Batterien oder Akkus mit Lithium-Ionen.

Eine besonders bevorzugte Schwingungssensoranordnung 1 ist dadurch gekennzeichnet, dass die Platine 18 unter mechanischer Vorspannung montiert ist, so dass sie einen konstanten Druck auf die zweite Seite 4 bzw. Endkappe des Piezoelements 2 ausübt. Dadurch ist eine besonders sicher fixierte Position des Piezoelements 2 im Verschlussstück 23 garantiert. Zusätzlich ist das Piezoelement bevorzugt teilweise in ein stabilisierendes Isolationsmaterial eingegossen, welches dem Piezoelement 2 eine verbesserte Stabilität oder Widerstandsfähigkeit verleiht, ohne dessen Sensitivität zum detektieren von Vibrationen nachteilig zu beeinflussen. Vorzugsweise wird das Piezoelement 2 in Nylon eingegossen. Die Wand der wasserdichten Kapsel 6 ist in Fig. 1 elektrisch leitend ausgebildet und bildet den elektrischen Kontakt 10 zum Piezoelement 2 sowie den elektrischen Leiter 14 zum anderen Pol der Batterie 12 dieser Schwingungssensoranordnung 1.

Bevorzugt ist dieses Aufzeichnungsgerät 11 zudem als Auswertungs- und Anzeigegerät zum Auswerten und Anzeigen von sich aus den vom Piezoelement 2 erzeugten elektrischen Signalen ergebenden Resultaten ausgebildet und weist dafür eine Anzeige 24 zum Anzeigen von Einzelwerten oder auch von Verlaufskurven solcher Werte auf.

Die erfindungsgemässe Schwingungssensoranordnung 1 kann (wie in Fig. 1 gezeigt) aus einem einzigen Gerät bestehen, welches ein Gehäuse 27 mit dem Aufzeichnungs-, Auswerte- und Anzeigegerät und ein fest eingebautes Sensor/Batteriefach in Form der wasserdichten Kapsel 6 umfasst. Ein solches Gerät ist vorzugsweise wasserdicht ausgebildet, um seine Funktion auch bei hoher Luftfeuchtigkeit, bei Regenwetter oder bei Spritzwasserbelastung sicherzustellen.

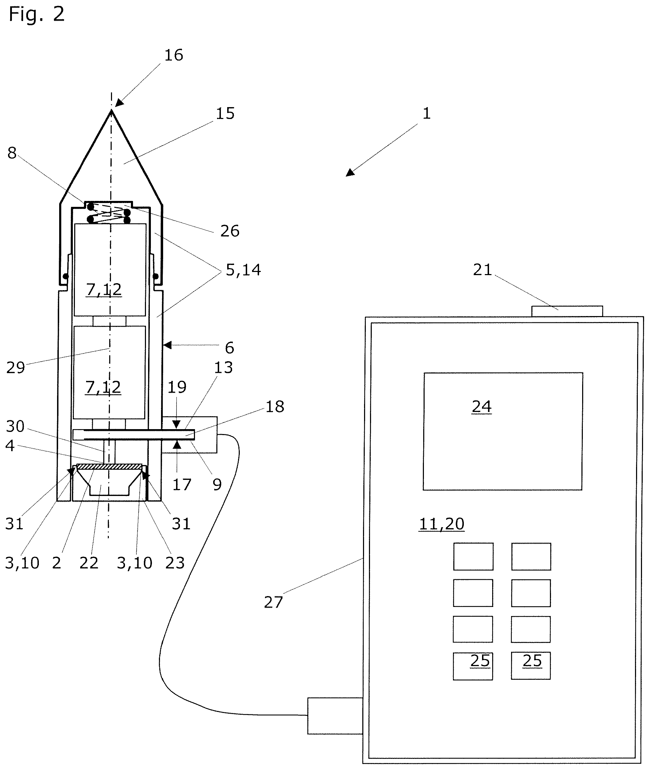

Allerdings kann das Sensor/Batteriefach auch gegenüber dem Gehäuse des Aufzeichnungs-, Auswerte- und Anzeigegeräts beweglich und ausserhalb desselben angeordnet und mit diesem über lediglich die Kontakte 9,10 und die elektrischen Leiter 13,14 verbunden sein (vgl. Fig. 2). Eine solche alternative bzw. zweite Ausführungsform könnte mit Vorteil dort eingesetzt werden, wo der günstigste Ort zum Abgreifen der Vibrationen schlecht zugänglich ist, so dass entweder die Tasten 25 oder die Anzeige 24 eines kombinierten Aufzeichnungs-, Auswerte- und Anzeigegeräts mit eingebautem Sensor/Batteriefach nicht sichtbar oder nicht ablesbar sind. In einem solchen Falle ist jeder der beiden flexibel mit einander verbundenen Teile, das Aufzeichnungs-, Auswerte- und Anzeigegerät und das Sensor/Batteriefach, für sich wasserdicht ausgebildet. Die Verbindung dieser beiden Teile kann auch steckbar ausgebildet sein. Im Gegensatz zu der ersten Ausführungsform (vgl. Fig. 1) ist das Piezoelement 2 gemäss der zweiten, in Figur 2 gezeigten Ausführungsform als Membran ausgebildet. Effektiv handelt es sich hier um eine Stab/Membran-Kombination, wobei der Stab 30 als elektrischer und mechanischer Leiter (vgl. Fig. 2) oder auch als zusätzliches Piezoelement ausgebildet sein kann (nicht gezeigt). Die hier alternativ zu einem stabförmigen Piezoelement verwendete Piezomembran wird bevorzugt senkrecht zur Kapselachse 29 angeordnet. Speziell bevorzugt wird das Fixieren der Peripherie 31 einer solchen Piezomembran am dichtend und mechanisch befestigt in die Kapsel 6 eingebauten Verschlussstück 23. Der Stab 30 ist hier auf der zweiten Seite 4 der Piezomembran und vorzugsweise in deren Zentrum angeordnet. Fixiert ist dieser Stab 30 vorzugsweise entweder an der Piezomembran oder an der ersten Seite 17 der Platine 18. Wie aus der Figur 2 ersichtlich ist, wird das Verschlussstück 23 bevorzugt mit einer weiten bzw. trichterförmigen Vertiefung versehen, um der Piezomembran eine möglichst grosse Beweglichkeit zu ermöglichen. Piezomembranen bzw. Piezomembranstapel, die entsprechend ihren durch eine vibrierende Masse bewirkten Durchbiegungsschwankungen elektrische Signale erzeugen, sind dem Fachmann aus dem Stand der Technik bekannt.

Speziell bevorzugt ist dieses Aufzeichnungs-, Auswerte- und Anzeigegerät der Schwingungssensoranordnung 1 als multifunktionelles Messgerät 20 ausgebildet, wobei dieses multifunktionelle Messgerät 20 zumindest eine Steckverbindung und einen digitalen 1Wire^{®} -Bus (1-Wire^{®} ist ein eingetragenes Warenzeichen der Dallas Semiconductor Corp., USA) zum Anschliessen von den Einsatzgebieten entsprechenden 1Wire^{®} -Messsonden umfasst. Dieser 1Wire^{®} -Bus verwendet nur zwei Drähte, welche das Gerät speisen und digitale Daten in beiden Richtungen übermitteln können. Dank dieser Technologie kann einen nahezu unbegrenzte Anzahl von 1Wire^{®} -Messsonden an einen einzigen 1Wire^{®} -Bus angeschlossen werden. Alle möglichen 1Wire^{®} -Messsonden können im Zusammenhang mit diesem multifunktionellen Messgerät 20 verwendet werden, weil dieses zumindest eine Steckverbindung 21 umfasst und der Prozessor dieses multifunktionellen Messgeräts 20 eine beliebige 1Wire^{®} -Messsonde automatisch erkennt, falls eine mit "ON" bezeichnete Taste 25 zum Einschalten des Geräts gedrückt wird. Sofort wird ein dem angekoppelten Sensor entsprechender Messwert auf der Anzeige 24 angezeigt. Alle Messungen können dem entsprechenden Logger entnommen werden, ausgewertet und angezeigt werden, ohne dass das multifunktionelle Messgerät 20 zusätzlich an einen Personalcomputer oder einen anderen Rechner angeschlossen werden muss. Dies wird dadurch ermöglicht, dass alle Sensoren "gechipt" sind. Ein sogenannter "Flash-RAM-Chip" mit einem individuellen, einmaligen Code identifiziert jeden Sensor bzw. jede 1Wire^{®} -Messsonde und speichert zudem die individuellen Eichwerte der Sensoren. Dies ermöglicht vorteilhafterweise, dass nur die Sensoren zum erneuten Eichen an eine zentrale Stelle gesandt werden müssen, nicht aber das ganze multifunktionelle Messgerät 20. Ein geeichter Sensor bzw. eine geeichte 1Wire^{®} -Messsonde kann in jedes beliebige multifunktionelle Messgerät 20 eingesteckt werden. Dieses multifunktionelle Messgerät 20 übernimmt dann die aktuellen Eichwerte vom "Chip" des Sensors und speichert diese auf dem "Flash-RAM-Chip". Die interne Schaltung dieses multifunktionelle Messgerät 20 ist vorzugsweise selbst-eichend ausgebildet.

Bevorzugt umfasst dieses multifunktionelle Messgerät 20 eine in den Prozessor geladene Software, welche eine mehrsprachige Menüführung und eine Loggerfunktion für das Aufzeichnen von allen Messungen der ansteckbaren Sensortypen ermöglicht.

Typische Einsatzgebiete eines solchen multifunktionellen Messgeräts 20 sind:
- das Erfassen von Vibrationen, und
- das Detektieren von brennbaren Gasen, und/oder
- das Messen von Druckwerten, und/oder
- das Messen von Temperaturwerten, und/oder
- das Messen von Durchflusswerten, und/oder
- das Messen von Feuchtigkeitswerten.

Dabei ist eine hauptsächliche Verwendung des multifunktionellen Messgeräts 20 auf das Detektieren von Schwingungen ausgerichtet, die auf Lecks in Fluidleitungen oder auf Lagerschäden von Transportmitteln und Maschinen zurückzuführen sind. Es ist bekannt, dass Lecks in Fluidleitungen (wie Wasserleitungen oder Gasleitungen) mittels akustischer Detektion der durch das ausströmende Fluid erzeugten Geräusche bzw. Vibrationen festgestellt und geortet werden können (vgl. beispielsweise DE 197 57 581 A1 oder EP 1 052 492 A1). Tatsächlich ergeben sich beim Einsatz der erfindungsgemässen multifunktionellen Messgeräten 20 die gleichen Messwerte, wie mit den permanent eingebauten Detektoren des Systems ORTOMAT. Das Messen von Schwingungen oder Vibrationen an Lagern von Transportmitteln und Maschinen umfasst das Prüfen von Radlagern an Automobilen, Eisenbahnwaggons und anderen Transportmitteln. Auch Wellenlager von Antrieben in oder an solchen Transportmitteln können auf Vibrationen geprüft werden, so dass Lagerschäden frühzeitig entdeckt und entsprechende Ausfälle oder Unfälle vermieden werden können. Mit dem multifunktionellen Messgerät 20 können Vibrationen mit sehr kleinen Auslenkungen von beispielsweise etwa 1 µm, die unter der Hörbarkeitsgrenze des menschlichen Ohrs liegen, gemessen werden. Solche Vibrationen können mit der Schwingungssensoranordnung 1 bzw. mit dem multifunktionellen Messgerät 20 erfasst und im Datalogger gespeichert und/oder direkt in einem Kopfhörer hörbar gemacht werden. Dabei ist dieser Kopfhörer vorzugsweise drahtlos mit der Schwingungssensoranordnung 1 bzw. mit dem multifunktionellen Messgerät 20 verbunden.

Drucksensoren für alle Messbereiche und mit unterschiedlicher Messgenauigkeit sind an das multifunktionelle Messgerät 20 ansteckbar, wobei die Temperatur des Mediums mitbestimmt wird. Digitale Temperatursensoren und Widerstandsthermometer des Typs Pt 1000 messen die Temperatur bis auf 0.1 °C genau.

Gassensoren für Methan und andere brennbaren Gase werden beheizt, wobei die Lithiumbatterien des multifunktionellen Messgeräts 20 eine Betriebszeit von bis zu 40 Stunden ermöglichen (mit Alkalibatterien ca. 20 Stunden).

Die Anzahl der an das multifunktionelle Messgerät 20 anschliessbaren Durchflussmesser und vieler weiterer Impulsgeber ist nur durch den praktischen Einsatz beschränkt, weil das multifunktionelle Messgerät 20 über den 1-Wire^{®}-Bus praktisch beliebig erweiterbar ist.

Für die Messung von Feuchtigkeit unterstützt das multifunktionelle Messgerät 20 alle 4-20 mA Analog-Quellen, wobei die maximale Speisespannung des 4-20 mA Busses 5 V beträgt. Für extrem lange Einsätze des multifunktionellen Messgeräts 20 empfiehlt sich der Einsatz einer externen Speisung, die separat am Gerät eingesteckt oder auch am Sensor/Batteriefach der wasserdichten Kapsel 6 angeschlossen werden kann (nicht gezeigt).

Alle Bezugszeichen benennen entsprechende Teile in den Figuren, auch wenn diese nicht in jedem Fall ausführlich beschrieben sind. Beliebige Kombinationen von Elementen der gezeigten bzw. beschriebenen Ausführungsformen gehören zum Umfang der vorliegenden Erfindung.

### Bezugszeichen:

- 1: Schwingungssensoranordnung
- 2: Piezoelement
- 3: erste Seite
- 4: zweite Seite
- 5: schwingende Masse
- 6: wasserdichte Kapsel
- 7: ruhende Masse
- 8: Feder
- 9,10: elektrischer Kontakt
- 11: Aufzeichnungsgerät
- 12: Batterie
- 13: elektrischer Leiter
- 14: elektrischer Leiter
- 15: Fühlerende
- 16: Kegelspitze
- 17: erste Seite der Platine
- 18: Platine
- 19: zweite Seite der Platine
- 20: multifunktionelles Messgerät
- 21: Steckverbindung
- 22: Vertiefung
- 23: Verschlussstück
- 24: Anzeige
- 25: Tasten
- 26: innere Vertiefung
- 27: Gehäuse
- 28: Gegenmutter
- 29: Kapselachse
- 30: Stab
- 31: Peripherie

## Patentansprüche

1. Schwingungssensoranordnung (1) umfassend:
(a) eine schwingende Masse (5), welche permanent in mechanischem Kontakt mit einer ersten Seite (3) eines Piezoelements (2) steht, wobei diese schwingende Masse (5) eine wasserdichte Kapsel (6) umfasst, in welcher das Piezoelement (2) fixiert ist;
(b) eine ruhende Masse (7), welche permanent in mechanischem Kontakt mit einer zweiten Seite (4) des Piezoelements (2) steht und welche in dieser wasserdichten Kapsel (6) angeordnet ist;
(c) eine Feder (8), welche zwischen der ruhenden Masse (7) und der schwingenden Masse (5) angeordnet ist und mittels welcher der permanente mechanische Kontakt der beiden Massen (5,7) mit den beiden Seiten (3,4) des Piezoelements (2) gewährleistet ist, indem sie diese beiden Massen (5,7) konstant gegen beiden Seiten (3,4) des Piezoelements (2) drückt;
(d) elektrische Kontakte (9,10) zum Abgreifen von elektrischen Signalen, welche von diesem Piezoelement (2) erzeugt werden und zum Weiterleiten dieser Signale an ein Aufzeichnungsgerät (11), welches mit den elektrischen Kontakten (9,10) verbunden bzw. verbindbar ist, und welches zum Aufzeichnen der vom Piezoelement (2) erzeugten elektrischen Signale ausgebildet ist,
**dadurch gekennzeichnet, dass** die Schwingungssensoranordnung (1) tragbar ausgebildet ist und die wasserdichte Kapsel (6) und die ruhende Masse (7) als Stromversorgung für dieses Aufzeichnungsgerät (11) ausgebildet sind, indem diese ruhende Masse (7) zumindest eine Batterie (12) für den Betrieb dieses Aufzeichnungsgeräts (11) umfasst, wobei diese zumindest eine Batterie (12) über elektrische Leiter (13,14) mit diesem Aufzeichnungsgerät (11) verbunden bzw. verbindbar ist.

2. Schwingungssensoranordnung (1) nach Anspruch 1, **dadurch gekennzeichnet, dass** das Piezoelement ein stabförmiges Piezoelement oder ein Piezostapel mit einer ersten, als Endkappe ausgebildeten Seite (3) und einer zweiten, als Endkappe ausgebildeten Seite (4) ist, wobei dieses Piezoelement (2) entsprechend den über die schwingende Masse (5) in demselben bewirkten Druckschwankungen elektrische Signale erzeugt.

3. Schwingungssensoranordnung (1) nach Anspruch 2, **dadurch gekennzeichnet, dass** der elektrische Kontakt (9) auf einer ersten Seite (17) einer Platine (18) angeordnet ist und der elektrische Leiter (13) auf einer zweiten Seite (19) der Platine (18) angeordnet ist, wobei diese Platine (18) so zwischen dem Piezoelement (2) und der zumindest einen Batterie (12) angeordnet ist, dass die zweite Endkappe bzw. Seite (4) des Piezoelements (2) den elektrischen Kontakt (9) und ein erster Pol der Batterie (12) den elektrischen Leiter (13) kontaktiert.

4. Schwingungssensoranordnung (1) nach Anspruch 1, **dadurch gekennzeichnet, dass** das Piezoelement eine Piezomembranen bzw. ein Piezomembranstapel mit einer ersten, als Peripherie (31) ausgebildeten Seite (3) und einer zweiten, mit einem Stab (30) beaufschlagten Seite (4) ist, wobei dieses Piezoelement (2) entsprechend den über die schwingende Masse (5) in demselben bewirkten Durchbiegungsschwankungen elektrische Signale erzeugt.

5. Schwingungssensoranordnung (1) nach Anspruch 4, **dadurch gekennzeichnet, dass** der elektrische Kontakt (9) auf einer ersten Seite (17) einer Platine (18) angeordnet ist und der elektrische Leiter (13) auf einer zweiten Seite (19) der Platine (18) angeordnet ist, wobei diese Platine (18) so zwischen dem Stab (30) und der zumindest einen Batterie (12) angeordnet ist, dass die zweite Seite (4) des Piezoelements (2) den elektrischen Kontakt (9) und ein erster Pol der Batterie (12) den elektrischen Leiter (13) kontaktiert.

6. Schwingungssensoranordnung (1) nach einem der vorhergehenden Ansprüche, **dadurch gekennzeichnet, dass** die Schwingungssensoranordnung (1) teilweise so in das Aufzeichnungsgerät (11) eingebaut ist, dass die schwingende Masse (5) dieses Aufzeichnungsgerät (11) mit umfasst, wobei die wasserdichte Kapsel (6) ein Fühlerende (15) umfasst, das ausserhalb des, vorzugsweise ebenfalls wasserdicht ausgebildeten, Aufzeichnungsgeräts (11) angeordnet ist.

7. Schwingungssensoranordnung (1) nach einem der Ansprüche 1 bis 5, **dadurch gekennzeichnet, dass** die Schwingungssensoranordnung (1) ausserhalb des, vorzugsweise ebenfalls wasserdicht ausgebildeten, Aufzeichnungsgeräts, gegenüber demselben beweglich angeordnet und mit diesem über lediglich die Kontakte 9,10 und die elektrischen Leiter 13,14 verbunden ist, wobei die wasserdichte Kapsel (6) ein Fühlerende (15) umfasst.

8. Schwingungssensoranordnung (1) nach einem der Ansprüche 6 oder 7, **dadurch gekennzeichnet, dass** das Fühlerende (15) als Schraubdeckel für die die Batterien aufnehmende, wasserdichte Kapsel (6) ausgebildet ist, wobei dieser Schraubdeckel vorzugsweise eine Kegelspitze (16) zum gezielten Abtasten oder Abgreifen von Schwingungen aufweist.

9. Schwingungssensoranordnung (1) nach einem der vorhergehenden Ansprüche, **dadurch gekennzeichnet, dass** die wasserdichte Kapsel (6) geeignete Materialien zum Übertragen von Vibrationen und zum Leiten von elektrischem Strom bzw. von elektrischen Signalen umfasst.

10. Schwingungssensoranordnung (1) nach Anspruch 9, **dadurch gekennzeichnet, dass** die wasserdichte Kapsel (6) aus einem elektrisch leitenden Kunststoff oder aus einem Metall, vorzugsweise aus einer Messinglegierung, ausgebildet ist und zumindest einen O-Ring zum dichtenden Verbinden von verschraubten Teilen derselben umfasst.

11. Schwingungssensoranordnung (1) nach einem der Ansprüche 3 oder 5, **dadurch gekennzeichnet, dass** die Platine (18) unter mechanischer Vorspannung montiert ist, so dass sie einen konstanten Druck auf die zweite Seite (4) des Piezoelements (2) ausübt.

12. Schwingungssensoranordnung (1) nach den Ansprüchen 3 und 11, **dadurch gekennzeichnet, dass** das stabförmige Piezoelement (2) teilweise in ein dieses stabilisierende Isolationsmaterial, vorzugsweise Nylon, eingegossen ist.

13. Schwingungssensoranordnung (1) nach einem der vorhergehenden Ansprüche, **dadurch gekennzeichnet, dass** die Wand der wasserdichten Kapsel (6) elektrisch leitend ausgebildet ist und den elektrischen Kontakt (10) zum Piezoelement (2) sowie den elektrischen Leiter (14) zum anderen Pol der Batterie (12) bildet.

14. Schwingungssensoranordnung (1) nach einem der vorhergehenden Ansprüche, **dadurch gekennzeichnet, dass** dieses Aufzeichnungsgerät (11) zudem als Auswerte- und Anzeigegerät zum Auswerten und Anzeigen von sich aus den vom Piezoelement (2) erzeugten elektrischen Signalen ergebenden Resultaten ausgebildet ist.

15. Schwingungssensoranordnung (1) nach Anspruch 14, **dadurch gekennzeichnet, dass** dieses Aufzeichnungs-, Auswerte- und Anzeigegerät als multifunktionelles Messgerät (20) ausgebildet ist, dessen Einsatzbereich zumindest zwei der folgenden Einsatzgebiete umfasst: das Erfassen von Vibrationen, das Detektieren von brennbaren Gasen, das Messen von Druck-, Temperatur-, Durchfluss- und Feuchtigkeitswerten, wobei dieses multifunktionelle Messgerät (20) zumindest eine Steckverbindung (21) und einen digitalen 1Wire^{®} -Bus zum Anschliessen von den Einsatzgebieten entsprechenden 1Wire^{®} -Messsonden umfasst.

16. Verwendung der Schwingungssensoranordnung (1) nach einem der vorhergehenden Ansprüche zum Detektieren von Schwingungen bzw. Vibrationen, und zum Messen von Druck-, und/oder Temperatur-, und/oder Durchfluss-, und/oder Feuchtigkeitswerten.

## Claims

1. A vibration sensor assembly (1) comprising:
(a) an oscillating mass (5) which is permanently in mechanical contact with a first side (3) of a piezo element (2), wherein the oscillating mass (5) comprises a water-tight capsule (6), in which the piezo element (2) is fixed;
(b) a stationary mass (7) which is permanently in mechanical contact with a second side (4) of the piezo element (2) and which is arranged in said water-tight capsule (6);
(c) a spring (8) which is arranged between the stationary mass (7) and the oscillating mass (5), and by means of which the permanent mechanical contact of the two masses (5,7) with the two sides (3, 4) of the piezo element (2) is assured, by pressing these two masses (5,7) constantly against both sides (3,4) of the piezo element (2);
(d) electrical contacts (9, 10) for tapping electrical signals generated by said piezo element (2) and for relaying said signals to a recording device (11) which is connected to the electrical contacts (9, 10), resp. is connectable to the electrical contacts (9, 10) and which is designed for recording the electrical signals generated by the piezo element (2),
**characterized in that** the vibration sensor assembly (1) is designed to be portable and the water-tight capsule (6) and the stationary mass (7) are designed as a power supply for said recording device (11), **in that** said stationary mass (7) comprises at least one battery (12) for the operation of said recording device (11), wherein said at least one battery (12) is connected, resp. is connectable to said recording device (11) via electrical conductors (13, 14).

2. The vibration sensor assembly (1) according to claim 1, **characterized in that** the piezo element is a rod-shaped piezo element or a piezo stack with a first side (3) designed as end cap and a second side (4) designed as end cap, wherein said piezo element (2) generates electrical signals in accordance with pressure variations caused within the piezo element by the oscillating mass (5).

3. The vibration sensor assembly (1) according to claim 2, **characterized in that** the electrical contact (9) is arranged on one side (17) of a circuit board (18) and the electrical conductor (13) is arranged on a second side (19) of the circuit board (18), wherein said circuit board (18) is arranged between the piezo element (2) and the at least one battery (12) as such that that the second end cap resp. side (4) of the piezo element (2) contacts the electrical contact (9), and a first pole of the battery (12) contacts the electrical conductor (13).

4. The vibration sensor assembly (1) according to claim 1, **characterized in that** the piezo element is a piezo membrane resp. a piezo membrane stack with a first side (3) designed as periphery (31) and with a second side (4) where a rod (30) acts upon, wherein said piezo element (2) creates electrical signals in accordance with the deflection fluctuations caused by the oscillating masse (5) in the piezo element.

5. The vibration sensor assembly (1) according to claim 4, **characterized in that** the electrical contact (9) is arranged on a first side (17) of a circuit board (18) and the electrical conductor (13) is arranged on a second side (19) of the circuit board (18), wherein said circuit board (18) is arranged between the rod (30) and the at least one battery (12) as such that the second side (4) of the piezo element (2) contacts the electrical contact (9) and a first pole of the battery (12) contacts the electrical conductor (13).

6. The vibration sensor assembly (1) according to one of the preceding claims, **characterized in that** the vibration sensor assembly (1) is built-in in the recording device (11) as such that the oscillating mass (5) includes said recording device (11), wherein the water-tight capsule (6) comprises a sensor end (15) that is arranged outside of the recording device (11), preferably also designed water-tight.

7. The vibration sensor assembly (1) according to one of claims 1 to 5, **characterized in that** the vibration sensor assembly (1) is arranged movably outside of the recording device, opposite thereof, preferably also designed water-tight and is connected to the recording device by means of only the contacts (9, 10) and the electrical conductors (13, 14), wherein the water-tight capsule (6) comprises a sensor end (15).

8. The vibration sensor assembly (1) according to one of claims 6 or 7, **characterized in that** the sensor end (15) is designed as screw lid for the water-tight capsule (6) that is holding the batteries, wherein said screw lid comprises a cone tip (16) for the purpose of selectively scanning or tapping of vibrations.

9. The vibration sensor assembly (1) according to one of the preceding claims, **characterized in that** the water-tight capsule (6) comprises suitable materials for transmitting vibrations and for conducting electrical current resp. electrical signals.

10. The vibration sensor assembly (1) according to claim 9, **characterized in that** the water-tight capsule (6) is made of an electric conductive plastic or of a metal, preferably of a brass alloy and at least comprises an O-ring for sealingly connecting the screwed parts.

11. The vibration sensor assembly (1) according to one of claims 3 or 5, **characterized in that** the circuit board (18) is mounted under mechanical preload as such that it exerts a constant pressure on the second side (4) of the piezo element (2).

12. The vibration sensor assembly (1) according to claims 3 and 11, **characterized in that** the rod-shaped piezo element (2) is partially cast in a stabilizing insulating material, preferably nylon.

13. The vibration sensor assembly (1) according to one of the preceding claims, **characterized in that** the wall of the water-tight capsule (6) is designed electrically conductive and forms the electrical contact (10) to the piezo element (2) as well as the electrical conductor (14) to the other pole of the battery (12).

14. The vibration sensor assembly (1) according to one of the preceding claims, **characterized in that** said recording device (11) is designed additionally as evaluation and display device for evaluating and displaying results resulting from electrical signals generated by the piezo element (2).

15. The vibration sensor assembly (1) according to claim 14, **characterized in that** said recording, evaluation and display device is designed as multi-functional device (20), whose scope of application comprises at least two of the following applications: the recording of vibrations, the detection of combustible gases, the measurement of pressure, temperature, flow and humidity values, wherein said multi-functional measuring device (20) comprises at least one plug connection (21) and a digital 1Wire® bus for the connection of 1Wire® measuring sensors in accordance with the field of application.

16. The use of the vibration sensor assembly (1) according to one preceding claims for the detection of oscillations resp. vibrations, and for the measurement of pressure and/or temperature and/or, flow and/or humidity values.

## Revendications

1. Un ensemble de capteur de vibration (1) comprenant :
(a) une masse oscillante (5) qui est en contact mécanique permanent avec un premier côté (3) d'un élément piézoélectrique (2), où la masse oscillante (5) comprend une capsule étanche à l'eau (6), dans laquelle l'élément piézoélectrique (2) est fixé ;
(b) une masse stationnaire (7) qui est en contact mécanique permanent avec un deuxième côté (4) de l'élément piézoélectrique (2) et qui est disposé dans ladite capsule étanche à l'eau (6) ;
(c) un ressort (8) qui est disposé entre la masse stationnaire (7) et la masse oscillante (5), et au moyen duquel le contact mécanique permanent des deux masses (5,7) avec les deux côtés (3, 4) de l'élément piézoélectrique (2) est assuré, en appuyant ces deux masses (5,7) constamment contre les deux côtés (3,4) de l'élément piézoélectrique (2) ;
(d) des contacts électriques (9, 10) pour taper des signaux électriques générés par ledit élément piézoélectrique (2) et pour relayer lesdits signaux vers un dispositif d'enregistrement (11) qui est connecté aux contacts électriques (9, 10), resp. est connectable aux contacts électriques (9, 10) et qui est conçu pour enregistrer les signaux électriques générés par l'élément piézoélectrique (2),
**caractérisé en ce que** l'ensemble de capteur de vibration (1) est conçu pour être portable et la capsule étanche à l'eau (6) et la masse stationnaire (7) sont conçues comme une alimentation électrique pour ledit dispositif d'enregistrement (11), **en ce que** ladite masse stationnaire (7) comprend au moins une batterie (12) pour le fonctionnement dudit dispositif d'enregistrement (11), où ladite au moins une batterie (12) est connectée, resp. est connectable audit dispositif d'enregistrement (11) par l'intermédiaire de conducteurs électriques (13, 14).

2. L'ensemble de capteur de vibration (1) selon la revendication 1, **caractérisé en ce que** l'élément piézoélectrique est un élément piézoélectrique en forme de tige ou un empilement piézoélectrique avec un premier côté (3) conçu comme capuchon d'extrémité et un deuxième côté (4) conçu comme capuchon d'extrémité, où ledit élément piézoélectrique (2) génère des signaux électriques conformément à des variations de pression provoquées dans l'élément piézoélectrique par la masse oscillante (5).

3. L'ensemble de capteur de vibration (1) selon la revendication 2, **caractérisé en ce que** le contact électrique (9) est disposé d'un côté (17) d'une carte de circuit imprimé (18) et le conducteur électrique (13) est disposé sur un deuxième côté (19) de la carte de circuit imprimé (18), où ladite carte de circuit imprimé (18) est disposée entre l'élément piézoélectrique (2) et la au moins une batterie (12) en tant que telle que le deuxième cap d'extrémité resp. côté (4) de l'élément piézoélectrique (2) entre en contact avec le contact électrique (9), et un premier pôle de la batterie (12) entre en contact avec le conducteur électrique (13).

4. L'ensemble de capteur de vibration (1) selon la revendication 1, **caractérisé en ce que** l'élément piézoélectrique est une membrane piézoélectrique resp. une pile de membrane piézoélectrique avec un premier côté (3) conçu comme périphérie (31) et avec un deuxième côté (4) sur lequel une tige (30) agit sur, où ledit élément piézoélectrique (2) crée des signaux électriques en fonction des fluctuations de déflexion causée par la masse oscillante (5) dans l'élément piézoélectrique.

5. L'ensemble de capteur de vibration (1) selon la revendication 4, **caractérisé en ce que** le contact électrique (9) est disposé sur un premier côté (17) d'une carte de circuit imprimé (18) et le conducteur électrique (13) est disposé sur un deuxième côté (19) de la carte de circuit imprimé (18), où ladite carte de circuit imprimé (18) est agencée entre la tige (30) et la au moins une batterie (12) en tant que telle que le deuxième côté (4) de l'élément piézoélectrique (2) contacte le contact électrique (9) et un premier pôle de la batterie (12) contacte le conducteur électrique (13).

6. L'ensemble de capteur de vibration (1) selon l'une quelconque des revendications précédentes, **caractérisé en ce que** l'ensemble de capteur de vibrations (1) est intégré dans le dispositif d'enregistrement (11) en tant que tel que la masse oscillante (5) comprend ledit dispositif d'enregistrement (11), où la capsule (6) étanche à l'eau comprend une extrémité (15) du capteur qui est disposée à l'extérieur du dispositif d'enregistrement (11), de préférence également étanche à l'eau.

7. L'ensemble de capteur de vibration (1) selon l'une des revendications 1 à 5, **caractérisé en ce que** l'ensemble de capteur de vibrations (1) est disposé de manière mobile à l'extérieur du dispositif d'enregistrement, en vis-à-vis de celui-ci, de préférence également conçu étanche à l'eau et est relié au dispositif d'enregistrement par l'intermédiaire de seulement les contacts (9, 10) et les conducteurs électriques (13, 14), où la capsule étanche à l'eau (6) comprend une extrémité de capteur (15).

8. L'ensemble de capteur de vibration (1) selon l'une des revendications 6 ou 7, **caractérisé en ce que** l'extrémité de capteur (15) est conçue comme un couvercle à vis pour la capsule étanche à l'eau (6) qui maintient les batteries, où ledit couvercle à vis comprend une pointe de cône (16) pour le but de balayer ou de taper sélectivement des vibrations.

9. L'ensemble de capteur de vibration (1) selon l'une quelconque des revendications précédentes, **caractérisé en ce que** la capsule étanche à l'eau (6) comprend des matériaux appropriés pour transmettre des vibrations et pour conduire un courant électrique resp. des signaux électriques.

10. L'ensemble de capteur de vibration (1) selon la revendication 9, **caractérisé en ce que** la capsule étanche à l'eau (6) est constituée d'un plastique conducteur électrique ou d'un métal, de préférence d'un alliage de laiton et comprend au moins un joint torique pour relier de façon étanche les pièces vissées.

11. L'ensemble de capteur de vibration (1) selon l'une des revendications 3 ou 5, **caractérisé en ce que** la carte de circuit imprimé (18) est montée sous précharge mécanique en tant que telle exerçant une pression constante sur le deuxième côté (4) de l'élément piézoélectrique (2).

12. L'ensemble de capteur de vibration (1) selon les revendications 3 et 11, **caractérisé en ce que** l'élément piézoélectrique en forme de tige (2) est partiellement coulé dans un matériau isolant stabilisant, de préférence en nylon.

13. L'ensemble de capteur de vibration (1) selon l'une quelconque des revendications précédentes, **caractérisé en ce que** la paroi de la capsule étanche à l'eau (6) est conçue électriquement conductrice et forme également le contact électrique (10) avec l'élément piézoélectrique (2) en tant que le conducteur électrique (14) sur l'autre pôle de la batterie (12).

14. L'ensemble de capteur de vibration (1) selon l'une quelconque des revendications précédentes, **caractérisé en ce que** ledit dispositif d'enregistrement (11) est conçu en outre comme dispositif d'évaluation et d'affichage pour évaluer et afficher les résultats résultant des signaux électriques générés par l'élément piézoélectrique (2).

15. L'ensemble de capteur de vibration (1) selon la revendication 14, **caractérisé en ce que** ledit dispositif d'enregistrement, d'évaluation et d'affichage est conçu comme un dispositif multifonctionnel (20) dont le champ d'application comprend au moins deux des applications suivantes: l'enregistrement des vibrations, la détection des gaz combustibles, la mesure des valeurs de pression, de température, d'écoulement et d'humidité, où ledit dispositif de mesure multifonctionnel (20) comprend au moins une connexion à fiche (21) et un bus numérique 1Wire® pour la connexion des capteurs de mesure 1Wire® en fonction du champ d'application.

16. L'utilisation de l'ensemble de capteur de vibration (1) selon l'une des revendications précédentes pour la détection d'oscillations resp. des vibrations, et pour la mesure des valeurs de pression et/ou de température et/ou d'écoulement et/ou d'humidité.
